# EUROPEAN PATENT APPLICATION

(11) **EP 0 963 059 A2**
(43) Date of publication of application: **08.12.1999**
(21) Application number: 99110636.0
(22) Date of filing: 02.06.1999
(51) Int. Cl.: H04B 7/005

(54) **A CDMA mobile communication system and a transmission power control method for the same**

(30) Priority: 04.06.1998 JP 15579498
(71) Applicant: NEC CORPORATION, Tokyo (JP)
(72) Inventor: Nagata, Yoshinori, c/o NEC Corporation, Tokyo (JP)
(74) Representative: Glawe, Delfs, Moll & Partner

(57) **Abstract**

When reception quality of signals detected by a reception Eb/Io (ratio of power received waves to power of interfering waves) detector is equal to or more than a predetermined value and a frame error rate (FER) set by an FER measuring section for a first reference level or more is less than a predetermined reference value, a target Eb/Io setting section sets a value to increase the target reception quality. When the reception quality of signals thus detected is less than the predetermined value and the frame error rate set by the FER measuring section is equal to or more than the predetermined reference value, the target Eb/Io setting section sets a value to decrease the target reception quality.

## Description

### BACKGROUND OF THE INVENTION

### 1. Field of the Invention:

The present invention relates to a code division multiple access (CDMA) mobile communication system and a transmission power control method for the same.

### 2. Description of the Prior Art:

### Background of interference in CDMA mobile communication system

In a CDMA mobile communication system, one frequency band is shared by use of spread signals including a plurality of codes mathematically orthogonal to each other.

However, the codes adopted in the CDMA system are not completely orthogonal to each other but have a slightly cross correlation, which causes deterioration in communication quality by interference.

For example, when terminals A and B having the same transmission power communicate with a base station and terminal B is far away from the base station when compared with terminal A, there may occur a disadvantage as follows. Signals of terminals A and B received by the base station include interference components. In this situation, an interference component from the signal of terminal A becomes conspicuously greater than one from the signal from terminal B. This may lead to a disadvantage that the base station cannot receive signals sent from terminal B in some cases.

To remove this difficulty, a method has been used in which signal levels of signals received are measured by the base station for each terminal to accordingly control the transmission power thereof.

### Background of diversity handover (DHO)

The "Transactions of 1997 IEICE Nat. Conv. Commun. 1, B-5-196" describes a network for a mobile communication system. The system includes a plurality of radio base stations (referred to as BTS hereinbelow) connected via radio circuits or channels to mobile terminals for achieving communication therewith, base station controllers (referred to as BSC hereinbelow) for conducting switching or changeover operations between the base stations, and mobile services switching center (referred to as MSC hereinbelow) for conducting exchange operations of base station controllers.

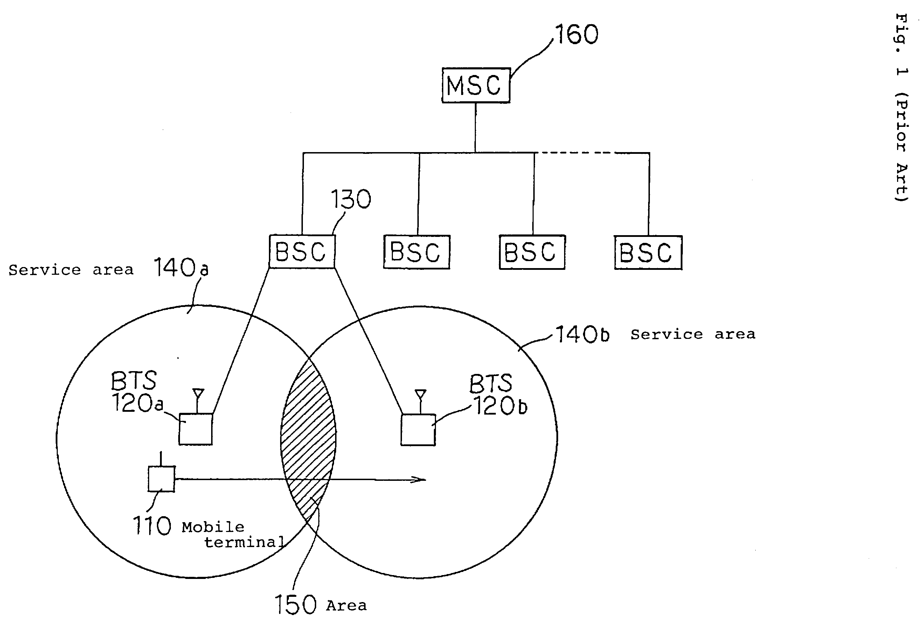

Fig. 1 shows an example of constitution of a conventional CDMA mobile communication system.

In this system, each radio communication channel uses one frequency band divided into codes mathematically orthogonal to each other. Diversity handover (referred to as DHO hereinbelow) is carried out as follows. When mobile terminal 110 in service area 140a of a BTS 120a traveling toward service area 140b of BTS 120b is in area 150 which overlaps service areas 140a and 140b, it acquires a radio channel for both BTS 120a and BTS 120b and carries a change-over between the two radio base stations.

This system is superior to the conventional TDMA system in which instantaneous interruption of communication is possible due to movement of the mobile station when the BTS is changed. Namely, in the system using the DHO scheme, since the mobile terminal acquires a channel for each of the two BTS in the overlapping region, instantaneous interruption of communication cannot take place during change of base stations.

During the DHO state, mobile terminal 110 sends signals to BTS 120a and BTS 120b. The received signals are combined into one signal by a mixer, not shown, disposed in BSC 130. This operation has been described in the "Transactions of 1997 IEICE Nat. Conv. Commun. 1, B-5-196".

### Background of basic form of outer loop (via BSC)

The "Transactions of 1997 IEICE Nat. Conv. Commun. 1, B-5-81" describes an example of a transmission power control method in a conventional CDMA mobile communication system. In the literature, a high-speed closed loop control method is associated with a downward or forward channel. However, a similar control method is applied to an upward or reverse channel.

Description will now be given of a high-speed closed loop control method on an upward channel.

In a BTS receiving a radio wave signal from a mobile terminal, the ratio of power of the radio wave to power of an interference wave (referred to as Eb/Io) is measured for comparison with an Eb/Io target value. In accordance with a result of comparison, a TPC bit pattern is determined to control transmission power at the pertinent mobile terminal. For example, if the measured ratio is less than the target ratio, the BTS sends a request including the TPC bit pattern to the mobile terminal to increase transmission power thereof. If the measured ratio exceeds the target ratio, the BTS transmits a request including the TPC bit pattern to the mobile terminal to decrease transmission power thereof.

In high-speed closed loop control, the target ratio of Eb/Io is set to the minimum value required to keep predetermined speech quality. However, due to fluctuation in propagation characteristics and other couses, the desired speech quality cannot be obtained in some cases even if ratio Eb/Io measured by BTS for signals received is equal to or more than the target ratio. On the other hand, the desired speech quality may be possibly obtained in some cases even if the ratio Eb/Io measured by BTS is less than the target ratio.

Consequently, the BTS periodically adjusts the target ratio of Eb/Io in accordance with the speech quality after the mixer conducts the operation of diversity. For example, the speech quality is adjusted as follows. If the speech quality is deterioratiod when compared with the predetermined speech quality, the target value of Eb/Io is increased; whereas, if the speech quality is less than the desired speech quality, target ratio Eb/Io is decreased.

The control operation to modify target ratio Eb/Io is carried out to guarantee quality of signals finally received. Consequently, in the DHO phase, the modification is accomplished on the basis of quality of signals produced from the mixer of the BSC. This control operation requires communication of signals between the BSC and the BTS to control the target value of Eb/Io. Namely, bandwidths are additionally used for this purpose in the signal lines between the BSC and the BTS.

Next, description will be given of the operation to control target ratio Eb/Io in the CDMA mobile communication system.

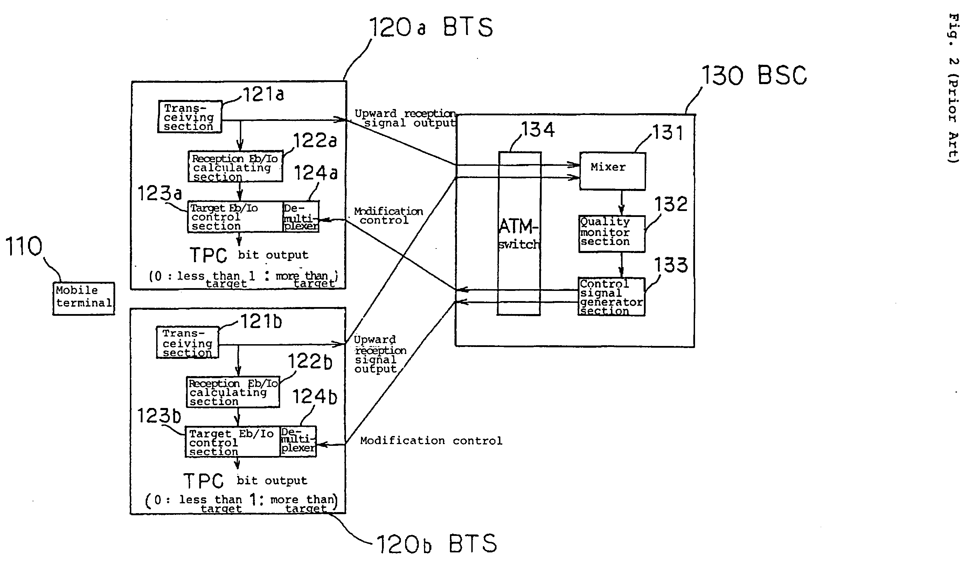

Fig. 2 shows configurations of the BTS 120a and 120b and the BSC 130 of the CDMA mobile communication system shown in Fig. 1.

In this description, it is assumed that in a state (i.e., DHO state) in which one mobile terminal 110 is communicating with a plurality of BTS 120a and 120b, target Eb/Io in BTS 120a is equal to target Eb/Io in BTS 120b.

First, an instantaneous value of ratio Eb/Io of signals received from terminal 110 is measured in each of BTS 120a and 120b, and measured results are each compared with target Eb/Io.

Subsequently, in accordance with results of comparison between measured instantaneous value of Eb/Io and target Eb/Io, a control signal is produced to increase or to decrease the transmission power of mobile terminal 110. The signal is then sent to mobile terminal 110.

In BTS 120a and 120b, signals received from mobile terminal 110 are demodulated and interpreted by transceiver sections 121a and 121b, respectively to reproduce user data for transmission to BSC 130.

Data from BTS 121a and BTS 121b received by BSC 130 are combined by a mixer 131.

User data produced by mixer 131 is transferred via an ATM switch 134 to an external device in another network, not shown, on one hand and is fed on the other hand to a quality monitor section 132. Quality of user data from mixer 131 is monitored for a predetermined period of time by the monitor section 132.

If the user data from mixer 131 is beyond a predetermined range of quality, this is notified to a control signal generator section 133. In the section 133, the target Eb/Io of each of BTS 120a and 120b is determined to be insufficient, and a control signal to increase target Eb/Io is sent together with user data in a multiplexed form to BTS 120a and 120b.

The control signal to increase target Eb/Io is received by BTS 120a and 120b and fed to demultiplexers 124a and 124b arranged in BTS 120a and 120b respectively. In demultiplexers 124a and 124b, the signals are demultiplexed to obtain user data and control signals. The control signals are then fed to target Eb/Io control sections 123a and 123b.

Next, in accordance with the control signals from BSC 130, controllers 123a and 123b determine new target values of Eb/Io, and the target values of Eb/Io are modified in transceiver sections 121a and 121b.

However, in the conventional CDMA mobile communication system, speech quality of signals transmitted from each mobile station is monitored by a base station controller (BSC). According to results of the monitoring, target Eb/Io is set in the base terminal station (BTS) for the signals sent from the mobile terminal. Consequently, the greater the distance between the mobile terminal and the radio base station, the more the transmission power is increased in the control operation. This causes the problem that signals sent from the mobile terminal interfere with other mobile terminals and an additional transmission capacity is required between BTS and BST for the modification of the target Eb/Io.

### SUMMARY OF THE INVENTION

It is therefore an object of the present invention, which has been devised in consideration of the problems of the conventional technology, to provide a CDMA mobile communication system and a transmission power control method for the same capable of preventing an undesired increase of the transmission power in a mobile terminal.

To achieve the object above, there is provided in accordance with the present invention a CDMA mobile communication system including at least a plurality of radio base stations connected via radio channels to mobile terminals for communicating with the mobile terminals and a base station controller for conducting a changeover of communication between the mobile terminals and the radio base stations, each of the radio base stations having a function to control the transmission power of the mobile terminals. The radio base station comprises detecting means for detecting reception quality of signals received from the mobile terminal, first comparator means for comparing the reception quality detected by the detecting means with a predetermined value, measuring means for measuring the frame error rate of signals received from the mobile terminal, for a first predetermined reference level equal to or more than the reception quality of the signals received, when the reception quality detected in accordance with a result of comparison by the first comparator means is equal to or more than the predetermined value, second comparator means for comparing the frame error rate measured by the measuring means with a predetermined reference value, setting means for setting target reception quality in accordance with a result of comparison by the second comparator means, third comparator means for comparing the reception quality detected by the detecting means with the target reception quality set by the setting means, and control signal generator means for generating and outputting a control signal to control the transmission power of the mobile terminal in accordance with the comparison by the third comparator means.

The measuring means measures the frame error rate of signals received from the mobile terminal with respect to a second predetermined reference level equal to or less than the reception quality of the signals received, when the reception quality detected in accordance with a result of comparison by the first comparator means is less than the predetermined value. The second reference level is less than the first reference level.

The setting means conducts a control operation to increase the target reception quality when the reception quality detected in accordance with a result of comparison by the first comparator means is equal to or more than the predetermined value and the frame error rate measured by the measuring means in accordance with a result of comparison by the second comparator is less than the reference value.

The setting means conducts a control operation to decrease the target reception quality when the reception quality detected in accordance with a result of comparison by the first comparator means is less than the predetermined value and the frame error rate measured by the measuring means in accordance with a result of comparison by the second comparator is equal to ore more than the reference value.

The CDMA mobile communication system further comprises storage means for storing the target reception quality set by the setting means.

The third comparator means compares the reception quality detected by the detecting means with the target reception quality stored in the storage means.

In accordance with the present invention, there is provided a CDMA mobile communication system including at least a plurality of radio base stations connected via radio channels to mobile terminals for communicating with the mobile terminals and a base station controller for conducting a changeover of communication between the mobile terminals and the radio base stations, each of the radio base stations having a function to control transmission power of the mobile terminals. The radio base station comprises detecting means for detecting a ratio of the power of signals received from the mobile terminal to the power of an interfering wave, first comparator means for comparing the ratio detected by the detecting means with a predetermined value, measuring means for measuring a frame error rate of signals received from the mobile terminal with respect to a first predetermined reference level equal to or more than the ratio of the power of signals received from the mobile terminal to the power of interfering wave, when the ratio detected in accordance with a result of comparison by the first comparator means is equal to or more than the predetermined value; second comparator means for comparing the frame error rate measured by the measuring means with a predetermined reference value, setting means for setting a target ratio of the power of signals received from the mobile terminal to the power of interfering wave in accordance with a result of comparison by the second comparator means, third comparator means for comparing the ratio detected by the detecting means with the target ratio set by the setting means, and control signal generator means for generating and outputting a control signal to control the transmission power of the mobile terminal in accordance with a result of comparison by the third comparator means.

The measuring means measures a frame error rate of signals received from the mobile terminal with respect to a second predetermined reference level equal to or less than the ratio of the power of signals received, when the ratio detected in accordance with a result of comparison by the first comparator means is less than the predetermined value. The second reference level is less than the first reference level.

The setting means sets to increase the target ratio currently used of the power of signals received to the power of interfering wave, when the ratio detected in accordance with a result of comparison by the first comparator means is equal to or more than the predetermined value and the frame error rate measured by the measuring means in accordance with a result of comparison by the second comparator means is less than the reference value.

The setting means sets to decrease the target ratio currently used of the power of signals received to the power of interfering wave, when the ratio detected in accordance with a result of comparison by the first comparator means is less than the predetermined value and the frame error rate measured by the measuring means in accordance with a result of comparison by the second comparator means is equal to or more than the reference value.

The control signal generator means generatios a control signal to conduct a control operation to increase the transmission power of the mobile terminal when the ratio detected in accordance with a result of comparison by the third comparator means is less than the target ratio set by the setting means and generatios a control signal to conduct a control operation to decrease the transmission power of the mobile terminal when the ratio detected in accordance with a result of comparison by the third comparator means is more than the target ratio set by the setting means.

The CDMA mobile communication system further comprises storage means for storing the target ratio set by the setting means. The third comparator means compares the ratio detected by the detecting means with the target ratio stored in the storage means.

The control signal outputted comprises a TPC bit pattern.

In accordance with the present invention, there is provided a transmission power control method for use in a CDMA mobile communication system including at least a plurality of radio base stations connected via radio channels to mobile terminals for communicating with the mobile terminals and a base station controller for conducting a changeover of communication between the mobile terminals and the radio base stations, each of the radio base stations having a function to control transmission power of the mobile terminals, comprising the steps of detecting reception quality of signals received from the mobile terminal; comparing the reception quality detected with a predetermined value; measuring a frame error rate of signals received from the mobile terminal with respect to a first predetermined reference level equal to or more than the reception quality of the signals received, when the reception quality detected in accordance with a result of the comparison is equal to or more than the predetermined value; comparing the frame error rate measured with a predetermined reference value; setting target reception quality in accordance with a result of the comparison; comparing the reception quality detected with the target instantaneous reception quality thus set; and generating and outputting a control signal to control the transmission power of the mobile terminal in accordance with a result of the comparison of reception quality.

The transmission power control method further comprises the step of measuring a frame error rate of signals received from the mobile terminal with respect to a second predetermined reference level equal to or less than the reception quality of the signals received, when the reception quality detected is less than the predetermined value, The second reference level is less than the first reference level.

The transmission power control method further comprises the step of conducting a control operation to increase the target reception quality when the reception quality detected is equal to or more than the predetermined value and the frame error rate measured is less than the reference value.

The transmission power control method further comprises the step of conducting a control operation to decrease the target reception quality when the reception quality detected is less than the predetermined value and the frame error rate measured is equal to or more than the reference value.

In accordance with the present invention, there is provided a transmission power control method for use in a CDMA mobile communication system including at least a plurality of radio base stations connected via radio channels to mobile terminals for communicating with the mobile terminals and a base station controller for conducting a changeover of communication between the mobile terminals and the radio base stations, each of the radio base stations having a function to control transmission power of the mobile terminals, comprising the steps of detecting a ratio of the power of signals received from the mobile terminal to the power of the interfering wave; comparing the ratio detected with a predetermined value; measuring a frame error rate of signals received from the mobile terminal with respect to at least one first predetermined reference level equal to or more than the ratio of the power of signals received from the mobile terminal to the power of interfering wave, when the ratio detected in accordance with a result of the comparison is equal to or more than the predetermined value; comparing the frame error rate measured with a predetermined reference value; setting a target ratio of the power of signals received to the power of interfering wave in accordance with a result of the comparison; comparing the ratio detected with the target ratio thus set; and generating and outputting a control signal to control the transmission power of the mobile terminal in accordance with a result of the comparison.

The transmission power control method further comprises the step of measuring a frame error rate of signals received from the mobile terminal with respect to a second predetermined reference level equal to or less than the reception quality of the signals received, when the ratio detected is less than the predetermined value. The second reference level is less than the first reference level.

The transmission power control method further comprising the step of setting to increase the target ratio currently used of the power of signals received to the power of the interfering wave, when the ratio detected is equal to or more than the predetermined value and the frame error rate measured is less than the reference value.

The transmission power control method further comprising the step of setting to decrease the target ratio currently used of the power of signals received to the power of the interfering wave, when the ratio detected is less than the predetermined value and the frame error rate measured is equal to or more than the reference value.

The transmission power control method further comprises the step of generating a control signal to conduct a control operation to increase the transmission power of the mobile terminal when the ratio detected is less than the target ratio thus set and generating a control signal to conduct a control operation to decrease the transmission power of the mobile terminal when the ratio detected is more than the target ratio thus set.

The transmission power control method further comprising the step of outputting a control signal comprising a TPC bit pattern.

In accordance with the present invention configured as above, when reception signal quality determined by the detector in accordance with results of comparison by the first comparator unit is equal to or more than a predetermined value, the measuring unit measures a frame error rate at a level equal to or more than the first reference level predetermined for received signal quality of signals transmitted from the mobile terminal. The second comparator unit compares the obtained frame error rate with a predetermined reference value. If the frame error rate is less than the reference value, the target received signal quality is set to a larger value. Therefore, in the mobile terminal in the DHO state, the disadvantage that the transmission power is excessively increased in the DHO state can be eliminated. This advantageously suppresses the chance that signals sent from a mobile terminal far away from a base terminal station will interfere with other mobile terminals. Moreover, the additionally required transmission capacity between the BTS and the BSC can be dispensed with.

Furthermore, when the received signal quality determined by the detector in accordance with results of comparison unit by the first comparator is less than the predetermined value, the measuring unit measures a frame error rate at a level less than the first reference level predetermined for received signal quality of signals transmitted from the mobile terminal. The second comparator unit compares the obtained frame error rate with a predetermined reference value. If the frame error rate is equal to or more than the reference value, the target reception signal quality is set to a smaller value. Consequently, the target reception signal quality is set to a necessary minimum level. As a result, as in the case above, it is possible to prevent disadvantageous excessive increase in transmission power in a mobile terminal in the DHO state, eliminating the interference of signals sent from a mobile terminal far away from a base terminal station with other mobile terminals.

The above and other objects, features, and advantages of the present invention will become apparent from the following description with reference to the accompanying drawings which illustratio examples of the present invention.

### BRIEF DESCRIPTION OF THE DRAWINGS

In the accompanying drawings:
Fig. 1 is a block diagram showing an example of constitution of a conventional CDMA mobile communication system;
Fig. 2 is a block diagram showing configurations of a BTS and a BSC in the system shown in Fig. 1;
Fig. 3 is a block diagram showing an embodiment of a CDMA mobile communication system in accordance with the present invention;
Fig. 4 is a block diagram partly showing a base band signal processing section and a control section shown in Fig. 3; and
Fig. 5 is a flowchart for explaining a transmission power control method of the CDMA mobile communication system in Figs. 3 and 4.

### DESCRIPTION OF THE PREFERRED EMBODIMENTS

Referring next to the accompanying drawings, description will be given of an embodiment in accordance with the present invention.

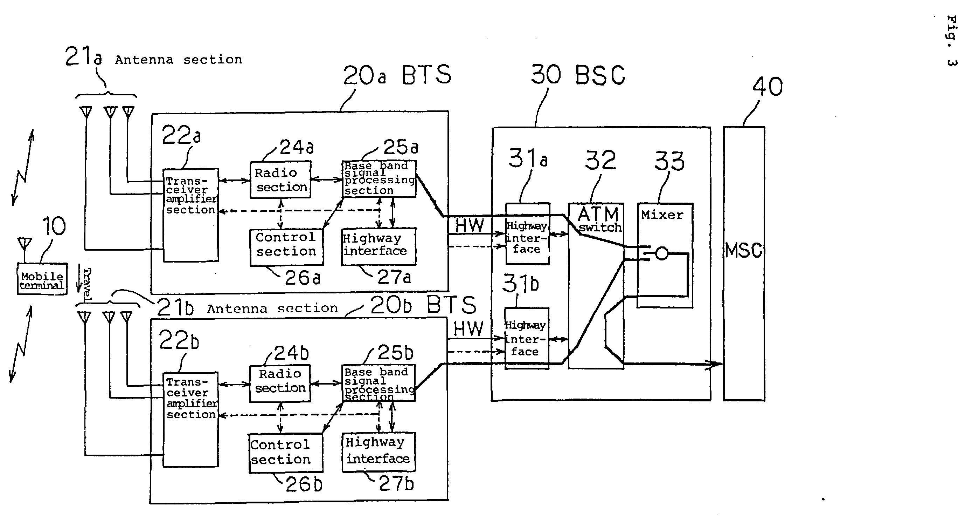

Fig. 3 shows in a block diagram an embodiment of a CDMA mobile communication system in accordance with the present invention.

As can be seen from Fig. 3, the system includes a plurality of radio base terminal stations (BTS) 20a and 20b connected via radio circuits or channels to a mobile terminal 10 to communicate with terminal 10, a base station controller (BSC) 30 to conduct a switching or changeover operation for communication with BTS 20a or 20b, and a mobile station controller (MSC) 40 to control the switching operation of BTS 20a and 20b. BTS 20a and 20b respectively include antenna sections 21a and 21b to conduct signal transmission and reception, transmission and reception signal amplifier sections 22a and 22b which respectively amplify reception signals received via antenna sections 21a and 21b and transmission signals to be transmitted via antenna sections 21a and 21b and which demultiplex the reception and transmission signals, and radio sections 24a and 24b which quasi-synchronously detect the reception signals amplified by amplifier sections 22a and 22b to obtain digital signals and which convert signals transmitted via antenna sections 21a and 21b into analog signals and then quadrature-modulate the analog signal into RF signals for transmission. The system further includes base band signal processing sections 25a and 25b which each conduct base band signal processing such as demodulation, synchronization, decoding of error correction codes, and demultiplexing of data for reception signals converted into a digital form by radio sections 24a and 25b and base band signal processing such as production of error correction codes, creation of frames, and modulation of data for transmission signals to be sent via the antenna sections 21a and 21b. Processing sections 25a and 25b further detect instantaneous quality Eb/Io of the reception and compare the detected Eb/Io with a target Eb/Io and produce a TPC bit pattern to control transmission power from the mobile terminal 10 in accordance with a result of the comparison. Further included in the system are control sections 26a and 26b each of which monitors quality of received signals in accordance with levels of Eb/Io detected respectively by the processing sections 25a and 25b and set new target values of Eb/Io in accordance with the quality of the reception signals monitored and highway interfaces 27a and 27b to establish interfaces for BSC 30. BSC 30 includes highway interfaces 31a and 31b to provide interfaces respectively for BTS 20a and 20b, a mixer 33 which combines signals from BTS 20a with those from BTS 20b to produce and deliver a combined signal to an MSC 40, and an ATM switch 32 to conduct a changeover of connection of mixer 33 between interfaces 31a and 31b.

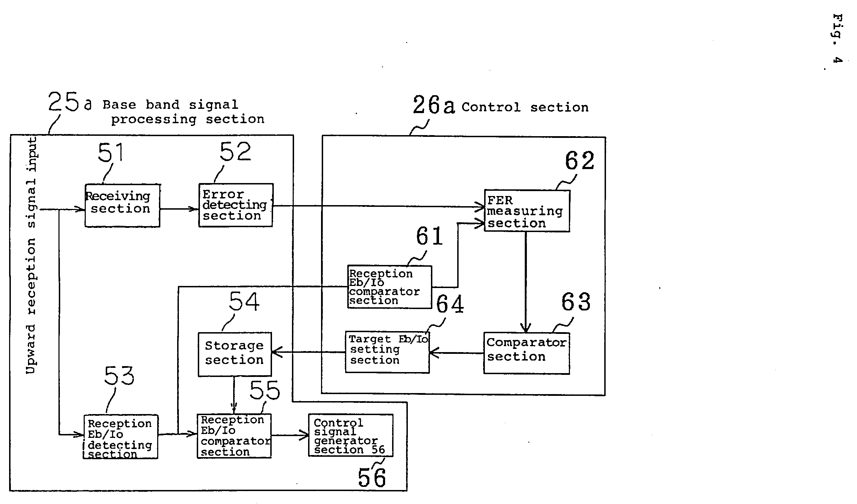

Fig. 4 shows in a block diagram part of configurations of base band signal processing section 25a and control section 26a. In this regard, signal processing sections 25a and 25b and control sections 26a and 26b are of the same configurations.

The section 25a of this embodiment includes as shown in Fig. 4 a receiving section 51 which receives upward signals converted in the digital form by radio section 24a and demodulates and interprets signals demodulated to reproduce user data, an error detecting section 52 to detect errors for each block of the user data reproduced by the section 51, a reception Eb/Io detecting section 53 which receives upward signals converted into digital form by radio section 24a to detect reception Eb/Io for the received upward signals, a storage section 54 to store a target Eb/Io set by control section 26, a reception Eb/Io comparator section 55 as a third comparing unit to compare reception Eb/Io detected by section 53 with target Eb/Io stored in storage section 54, and a control signal generator section 56 which generatios and outputs a TPC bit pattern to control transmission power from mobile terminal 10 to BTS 20a.

As shown in Fig. 4, control section 26a of the embodiment includes a reception Eb/Io comparator section 61 as a first comparing unit to compare reception Eb/Io detected by section 53 with a predetermined value and a frame error rate (FER) measuring section 62 which receives an error detected by section 52 and a result of comparison from comparator section 61 to measure, if reception Eb/Io detected by section 53 is equal to or more than the predetermined value, a frame error rate represented by a ratio of the number of error blocks to the total number of blocks of the user data having reception Eb/Io at a predetermined first reference level or more. If reception Eb/Io detected by section 53 is less than the predetermined value, measuring section 62 measures a frame error rate represented by a ratio of the number of error blocks to the total number of blocks of the user data having reception Eb/Io at a second reference level or less, the second reference level being less than the first reference level. Control section 26a further includes a comparator section 63 as a second comparing unit to compare the FER measured by section 62 with a predetermined FER reference value and a target Eb/Io setting section 64 to set a new value to target Eb/Io in accordance with a result of comparison by section 63.

Next, description will be given of a transmission power control method in the CDMA mobile communication system configured as above.

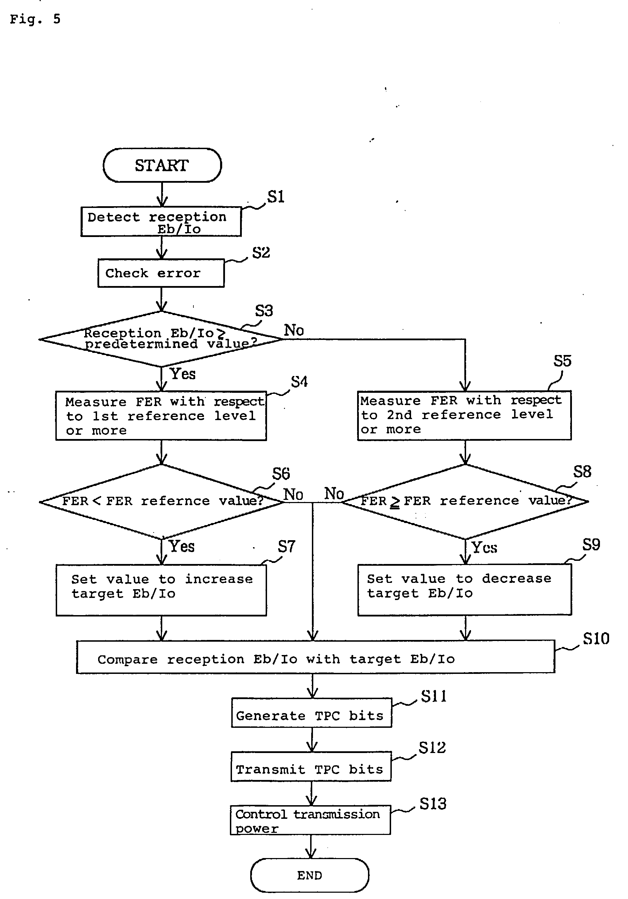

Fig. 5 is a flowchart to explain a transmission power control method of the CDMA mobile communication system of Figs. 3 and 4.

In the description of the embodiment, it is assumed that mobile terminal 10 travels in a direction from BTS 20a to BTS 20b in the diversity hand off state shown in Fig. 3. Mobile terminal 10 is communicating with BTS 20a and BTS 20b in this state.

Signals from mobile terminal 10 are received by antenna sections 21a and 21b respectively of BTS 20a and BTS 20b. The signals are amplified by transceiver amplifier sections 22a and 22b respectively of BTS 20a and BTS 20b. The amplified signals are converted by radio sections 24a and 24b into digital signals.

The digital signals from radio sections 24a and 24b are fed to receiving sections 51 of sections 25a and 25b respectively to be demodulated and interpreted into user data.

Simultaneously, the digital signals are fed from radio sections 24a and 24b respectively to reception Eb/Io detecting sections 53 of sections 25a and 25b respectively. For the digital signals, reception Eb/Io is detected by section 53 (step S1).

The user data is fed from section 51 to error detecting section 52 and errors are detected in each block of the reproduced user data (step S2). The error detection can be achieved as follows. When transmission signals are sent from a transmission side, CRC codes derived from user data are sent together with the transmission signals. Thereafter, CRC codes obtained from user data reproduced as above are compared with the CRC codes reproduced. The principle of this technology has been commonly known.

Subsequently, error information detected by sections 52 is transferred to FER measuring sections 62 of sections 26a and 26b respectively, which are ordinarily implemented by software of the base station controllers.

Reception Eb/Io detected by section 53 is transferred to Eb/Io comparator section 61 of associated control section 26a or 26b.

Eb/Io is compared with predetermined value by comparator section 61 of associated control section 26a or 26b (step S3) and a result of comparison is delivered to FER measuring section 62.

If Eb/Io is equal to or more than the predetermined value as a result of comparison in step S3, section 62 measures the FER value with respect to a first predetermined reference level equal to or more than the reception Eb/Io (step S4).

If Eb/Io is less than the predetermined value in step S3, section 62 measures the FER value with respect to a second reference level equal to or less than the reception Eb/Io, the second reference level being less than the first reference level (step S5).

After execution of step S4, the FER measured by section 62 is compared by comparator 63 with a predetermined FER reference value (step S6). If FER measured is less than the reference value, the target Eb/Io is increased by setting section 64 (step S7) to be stored in storage 54 of associated section 25a or 25b.

Thereafter, the FER measured by section 62 is compared by comparator 63 with a predetermined FER reference value (step S8). If the measured FER is equal to or more than the reference value, the target Eb/Io is decreased by setting section 64 (step S9) to be stored in storage 54 of associated section 25a or 25b.

If measured FER is less than the reference value in step S6 or if measured FER is equal to or more than the reference value in step S8, step S7 or S9 is executed and then reception Eb/Io detected by section 53 is compared by comparator section 55 with target Eb/Io stored in storage 54 (step S10).

In accordance with a result of comparison by comparator 55, section 56 generatios a TPC bit pattern to control transmission power of mobile terminal 10 (step S11). If reception Eb/Io from section 53 is less than target Eb/Io in storage 54, control is effected to increase the transmission power of mobile terminal 10; otherwise, the transmission power is lowered.

The TPC bit pattern generatiod in step S11 is then multiplexed with downward user signals to be sent via associated amplifier section 22a or 22b and associated antenna section 21a or 21b to mobile terminal 10 (step S12)

The TPC bit patterns from BTS 20a and BTS 20b respectively are then received by mobile terminal 10. In accordance with the patterns, values of transmission power to BTS 20a and BTS 20b are controlled in mobile terminal 10 (step 13).

In this embodiment, quality of reception signals of each of BTS 29a and BTS 20b is detected by a frame error rate expressed by a ratio of the number of error blocks to the total number of blocks of user data reproduced. However, the present invention is not limited to the embodiment but is applicable if the quality of reception signals of the user data of BTS 29a and BTS 20b is observed for a fixed period of time.

Although instantaneous reception quality in BTS 29a and BTS 20b is represented by Eb/Io of reception signals, the present invention is not restricted by the embodiment but is applicable only if instantaneous reception quality is obtainable for BTS 20a and BTS 20b.

As above, in accordance with the present invention, if the reception quality of signals sent from a mobile terminal is equal to or more than a predetermined value and a frame error rate of the signals for a predetermined first reference level of reception quality is less than a predetermined value, the target reception quality is set to a large value. Consequently, in a mobile terminal in the DHO state, excessive increase in transmission power can be avoided. It is therefore possible to prevent signals sent from a mobile terminal far away from a radio base station from interfering with other terminals. The transmission capacity additionally required between the radio base station and the base station controller can be dispensed with.

Only if the reception quality of signals sent from a mobile terminal is less than the predetermined value and the frame error rate of the signals with respect to a second predetermined reference level less than the first reference level, of reception quality is equal to or higher than a predetermined value, the target reception quality is set to a small value. In consequence, the target instantaneous reception quality is set to the minimum level required, similarly leading to the advantages described above.

While preferred embodiments of the present invention have been described using specific terms, such description is for illustratios purposes only, and it is to be understood that changes and variations may be made without departing from the spirit or scope of the following claims.

## Claims

1. A code division multiple access (CDMA) mobile communication system including at least a plurality of radio base stations connected via radio channels to mobile terminals for communicating with the mobile terminals and a base station controller for conducting a changeover off communication between the mobile terminals and the radio base stations, each of the radio base stations having a function to control transmission power of the mobile terminals, wherein the radio base station comprises:
detecting means for detecting reception quality of signals received from a mobile terminal;
first comparator means for comparing the reception quality detected by the detecting means with a predetermined value;
measuring means for measuring a frame error rate of signals received from the mobile terminal with respect to a first predetermined reference level equal to or more than the reception quality of the signals received, when the reception quality detected in accordance with the result of comparison by the first comparator means is equal to or more than the predetermined value;
second comparator means for comparing the frame error rate measured by the measuring means with a predetermined reference value;
setting means for setting target reception quality in accordance with the result of comparison by the second comparator means;
third comparator means for comparing the reception quality detected by the detecting means with the target reception quality set by the setting means; and
control signal generator means for generating and outputting a control signal to control the transmission power of the mobile terminal in accordance with the result of comparison by the third comparator means.

2. A CDMA mobile communication system in accordance with claim 1, wherein the measuring means measures the frame error rate of signals received from the mobile terminal with respect to a second predetermined reference level equal to or less than the reception quality of the signals received, when the reception quality detected in accordance with the result of comparison by the first comparator means is less than the predetermined value,
the second reference level being less than the first reference level.

3. A CDMA mobile communication system in accordance with claim 1 or 2, wherein the setting means conducts a control operation to increase the target reception quality when the reception quality detected in accordance with the result of comparison by the first comparator means is equal to or more than the predetermined value and the frame error rate measured by the measuring means in accordance with the result off comparison by the second comparator is less than the reference value.

4. A CDMA mobile communication system in accordance with claim 2 or 3, wherein the setting means conducts a control operation to decrease the target reception quality when the reception quality detected in accordance with the result of comparison by the first comparator means is less than the predetermined value and the frame error rate measured by the measuring means in accordance with the result of comparison by the second comparator is equal to or more than the reference value.

5. A CDMA mobile communication system in accordance with any of claims 1 to 4, further comprising
storage means for storing the target reception quality set by the setting means, wherein
the third comparator means compares the reception quality detected by the detecting means with the target reception quality stored in the storage means.

6. A code division multiple access (CDMA) mobile communication system including at least a plurality of radio base stations connected via radio channels to mobile terminals for communicating with the mobile terminals and a base station controller for conducting a changeover of communication between the mobile terminals and the radio base stations, each of the radio base stations having a function to control transmission power of the mobile terminals, wherein the radio base station comprises:
detecting means for detecting the ratio of the power of signals received from the mobile terminal to the power of an interfering wave;
first comparator means for comparing the ratio detected by the detecting means with a predetermined value;
measuring means for measuring a frame error rate of signals received from the mobile terminal with respect to a first predetermined reference level equal to or more than the ratio of the power of signals received from the mobile terminal to the power of the interfering wave, when the ratio detected in accordance with the result of comparison by the first comparator means is equal to or more than the predetermined value;
second comparator means for comparing the frame error rate measured by the measuring means with a predetermined reference value;
setting means for setting a target ratio of the power of signals received from the mobile terminal to the power of interfering wave in accordance with the result of comparison by the second comparator means;
third comparator means for comparing the ratio detected by the detecting means with the target ratio set by the setting means; and
control signal generator means for generating and outputting a control signal to control the transmission power of the mobile terminal in accordance with the result of comparison by the third comparator means.

7. A CDMA mobile communication system in accordance with claim 6, wherein the measuring means measures a frame error rate of signals received from the mobile terminal with respect to a second predetermined reference level equal to or less than the ratio of the power of signals received, when the ratio detected in accordance with the result of comparison by the first comparator means is less than the predetermined value,
the second reference level being less than the first reference level.

8. A CDMA mobile communication system in accordance with claim 7, wherein the setting means sets to increase the target ratio currently used of the power of signals received to the power of interfering wave, when the ratio detected in accordance with the result of comparison by the first comparator means is equal to or more than the predetermined value and the frame error rate measured by the measuring means in accordance with the result of comparison by the second comparator means is less than the reference value.

9. A CDMA mobile communication system in accordance with claim 7 or 8, wherein the setting means sets to decrease the target ratio currently used of the power of signals received to the power of interfering wave, when the ratio detected in accordance with the result off comparison by the first comparator means is less than the predetermined value and the frame error rate measured by the measuring means in accordance with the result of comparison by the second comparator means is equal to or more than the reference value.

10. A CDMA mobile communication system in accordance with any of claims 6 to 9, wherein the control signal generator means generates a control signal to conduct a control operation to increase the transmission power of the mobile terminal when the ratio detected in accordance with the resuit of comparison by the third comparator means is less than the target ratio set by the setting means and generates a control signal to conduct a control operation to decrease the transmission power of the mobile terminal when the ratio detected in accordance with the result of comparison by the third comparator means is more than the target ratio set by the setting means.

11. A CDMA mobile communication system in accordance with any of claims 6 to 10, further comprising
storage means for storing the target ratio set by the setting means, wherein
the third comparator means compares the ratio detected by the detecting means with the target ratio stored in the storage means.

12. A CDMA mobile communication system in accordance with any of claims 1 to 11, wherein the control signal outputted comprises a TPC bit pattern.

13. A transmission power control method for use in a code division multiple access (CDMA) mobile communication system including at least a plurality of radio base stations connected via radio channels to mobile terminals for communicating with the mobile terminals and a base station controller for conducting a changeover of communication between the mobile terminals and the radio base stations, each of the radio base stations having a function to control transmission power of the mobile terminals, comprising the steps of:
detecting reception quality of signals received from the mobile terminal;
comparing the reception quality detected with a predetermined value;
measuring a frame error rate of signals received from the mobile terminal with respect to a first predetermined reference level equal to or more than the reception quality of the signals received, when the reception quality detected in accordance with the result of comparison is equal to or more than the predetermined value;
comparing the frame error rate measured with a predetermined reference value;
setting target reception quality in accordance with the result of comparison;
comparing the reception quality detected with the target instantaneous reception quality thus set; and
generating and outputting a control signal to control the transmission power off the mobile terminal in accordance with the result of comparison of reception quality.

14. A transmission power control method for use in a CDMA mobile communication system in accordance with claim 13, further comprising the step of
measuring a frame error rate of signals received from the mobile terminal, with respect to a second predetermined reference level equal to or less than the reception quality of the signals received, when the reception quality detected is less than the predetermined value,
the second reference level being less than the first reference level.

15. A transmission power control method for use in a CDMA mobile communication system in accordance with claim 13 or 14, further comprising the step of
conducting a control operation to increase the target reception quality when the reception quality detected is equal to or more than the predetermined value and the frame error rate measured is less than the reference value.

16. A transmission power control method for use in a CDMA mobile communication system in accordance with any of claims 13 to 15, further comprising the step of
conducting a control operation to decrease the target reception quality when the reception quality detected is less than the predetermined value and the frame error rate measured is equal to or more than the reference value.

17. A transmission power control method for use in a code division multiple access (CDMA) mobile communication system including at least a plurality of radio base stations connected via radio channels to mobile terminals for communicating with the mobile terminals and a base station controller for conducting a changeover of communication between the mobile terminals and the radio base stations, each of the radio base stations having a function to control transmission power of the mobile terminals, comprising the steps of:
detecting the ratio of the power of signals received from the mobile terminal to the power of an interfering wave;
comparing the ratio detected with a predetermined value;
measuring a frame error rate of signals received from the mobile terminal with respect at least one first predetermined reference level equal to or more than the ratio of the power of signals received from the mobile terminal to the power of the interfering wave, when the ratio detected in accordance with the result of comparison is equal to or more than the predetermined value;
comparing the frame error rate measured with a predetermined reference value;
setting a target ratio of the power of signals received to the power of the interfering wave in accordance with the result of comparison;
comparing the ratio detected with the target ratio thus set; and
generating and outputting a control signal to control the transmission power of the mobile terminal in accordance with the result of comparison.

18. A transmission power control method for use in a CDMA mobile communication system in accordance with claim 17, further comprising the step of
measuring a frame error rate of signals received from the mobile terminal with respect to a second predetermined reference level equal to or less than the reception quality of the signals received, when the ratio detected is less than the predetermined value,
the second reference level being less than the first reference level.

19. A transmission power control method for use in a CDMA mobile communication system in accordance with claim 17 or 18, further comprising the step of
setting to increase the target ratio currently used of the power of signals received to the power of the interfering wave, when the ratio detected is equal to or more than the predetermined value and the frame error rate measured is less than the reference value.

20. A transmission power control method for use in a CDMA mobile communication system in accordance with any of claims 17 to 19, further comprising the step of
setting to decrease the target ratio currently used of the power of signals received to the power of the interfering wave, when the ratio detected is less than the predetermined value and the frame error rate measured is equal to or more than the reference value.

21. A transmission power control method for use in a CDMA mobile communication system in accordance with any of claims 17 to 20, further comprising the step of
generating a control signal to conduct a control operation to increase the transmission power of the mobile terminal when the ratio detected is less than the target ratio thus set and generating a control signal to conduct a control operation to decrease the transmission power of the mobile terminal when the ratio detected is more than the target ratio thus set.

22. A transmission power control method for use in a CDMA mobile communication system in accordance with any of claims 13 to 21, further comprising the step of
outputting the control signal comprising a TPC bit pattern.
